# EUROPÄISCHE PATENTSCHRIFT

(11) **EP 0 985 802 B1**
(45) Veröffentlichungstag und Bekanntmachung des Hinweises auf die Patenterteilung: **29.10.2003**
(21) Anmeldenummer: 98810900.5
(22) Anmeldetag: 10.09.1998
(51) Int. Cl.: F01D 5/18, C23C 4/00

(54) **Verfahren zum Ausbilden einer Filmkühlbohrung**
Method of forming a film cooling orifice
Méthode de formation d'un orifice pour le refroidissement par pellicule

(43) Veröffentlichungstag der Anmeldung: 15.03.2000
(73) Patentinhaber: ALSTOM (Switzerland) Ltd, 5401 Baden (CH)
(72) Erfinder: Hall, Kenneth, Gainesville, Georgia 30506 (US); Weigand, Bernhard, Dr., 79787 Lauchringen (DE); Wilfert, Günter, Dr., 79790 Küssaberg (DE)

(56) Entgegenhaltungen:
- EP-A- 0 227 582
- EP-A- 0 668 368
- EP-A- 0 807 744
- GB-A- 2 127 105
- US-A- 5 039 562

## Beschreibung

Die Erfindung betrifft *ein Verfahren zum Ausbilden einer* Filmkühlbohrung, insbesondere einer Filmkühlbohrung in einer zu beschichtenden, gekühlten Wand. *Vorzugsweise bildet die gekühlte Wand die äußere Wand eines Hohlprofilkörpers, insbesondere einer Gasturbinenschaufel.*

### Stand der Technik

Zur Steigerung der Leistung und des Wirkungsgrades werden bei heutigen Gasturbinenanlagen immer höhere Turbineneintrittstemperaturen verwendet. Um die Turbinenschaufeln vor den erhöhten Heißgastemperaturen zu schützen, müssen diese intensiver als bisher gekühlt werden. Bei entsprechend hohen Eintrittstemperaturen reicht eine rein konvektive Kühlung nicht mehr aus. Es wird daher vielfach die Methode der Filmkühlung verwendet. Dabei werden die Turbinenschaufeln durch einen Kühlfilm vor dem Heißgas geschützt. In die Schaufeln werden dazu Ausnehmungen, beispielsweise Bohrungen, eingebracht, durch die die Kühlluft ausgeblasen wird. In einem Ansatz wird, um einen möglichst hohen Kühleffekt zu erreichen, die ausgeblasene Kühlluft möglichst schnell umgelenkt, um schützend an der Profiloberfläche entlang zu strömen. Zudem werden durch eine schnelle seitliche Ausbreitung der Kühlluft auch die zwischen den Bohrungen liegenden Gebiete geschützt. Dies kann dadurch erreicht werden, daß die Kühlluftbohrungen einen Diffusor aufweisen, der aufgrund der seitlichen Aufweitung eine breitere Überdeckung der Oberfläche ermöglicht. Zur weiteren Verbesserung des Mischungsverhaltens werden Diffusorgeometrien verwendet, bei denen die Bohrung nicht nur seitlich, sondern zusätzlich auf der stromabwärts liegenden Seite der Bohrung aufgeweitet ist. Die Ausblaseraten bei diesen Diffusorgeometrien sind klein, so daß die Gefahr, daß die Kühlluft durch die Strömungsgrenzschicht hindurchtritt, gering ist. Daher kann der Kühlwirkungsgrad gegenüber einer zylindrischen Bohrung erheblich gesteigert werden. Beispielsweise beschreiben die Druckschriften *EP 0 227 582* und EP 0 228 338 eine gekühlte Wand mit einem Kühlmittelkanal, der einen Zumeßabschnitt und einen Diffusorabschnitt aufweist. Der Diffusorabschnitt enthält in stromaufwärtiger bzw. stromabwärtiger Richtung jeweils eine ebene Oberfläche. Zwei Seitenoberflächen divergieren zu dem Kühlmittelauslaß hin voneinander weg.

Andererseits werden Turbinenschaufeloberflächen oft mit einer schlecht wärmeleitenden, keramischen Schutzschicht überzogen. Dadurch kann Kühlluft eingespart und im Heißgasstrom verwendet werden, was zu einer Erhöhung der Gasturbinenleistung führt. Ein Überschreiten der zulässigen Materialtemperatur kann dann nur verhindert werden, wenn die Schaufel auf der Innenseite stark konvektiv gekühlt wird. Wird dabei für das Bohren der Kühlbohrungen ein Erodierverfahren eingesetzt, müssen die Bohrungen vor dem Aufbringen der keramischen Schutzschicht erzeugt werden, da die Schutzschicht elektrisch isoliert. Die nachfolgende Beschichtung legt in der Regel einen Teil der Öffnung zu, wodurch die Kühleigenschaften der Löcher beeinflußt werden. Es wird dann notwendig, in einem weiteren Verfahrensschritt das blockierende Material zu entfernen. Beispielsweise beschreibt die Druckschrift US-A-5,216,808 ein Verfahren zum Herstellen oder Reparieren eines Gasturbinenbauteils. Dabei wird nach Aufbringen einer Schutzschicht auf das Bauteil ein UV-Laserstrahl auf die Position eines Filmkühllochs gerichtet um blockierendes Beschichtungsmaterial athermisch zu entfernen. *Alternativ regt die Druckschrift EP 0 807 744 für Bohrungen mit im wesentlichen konstantem Querschnitt an, vor dem Beschichtungsvorgang die Austrittsöffnung gegenüber der Eintrittsöffnung zu vergrössern und damit eine unerwünschte Reduktion des Austrittssquerschnitts durch eindringendes Beschichtungsmaterial zu vermeiden*.

Werden die Bohrungen mit dem Laser-Perkussionsverfahren hergestellt, können die Bohrungen auch nach dem Aufbringen der Schutzschicht erzeugt werden. Jedoch entstehen dabei häufig Risse in der Schutzschicht, die bei thermischer Belastung zu deren Abplatzen führen können. Eine Minimierung der Querschnittsverjüngung wurde durch einen Herstellungsprozeß mit Laser-Perkussionsbohren und keramischer Beschichtung erzielt (DE-C-195 36 312).

### Darstellung der Erfindung

Hier setzt die Erfindung an. Der Erfindung, wie sie in den Patentansprüchen gekennzeichnet ist, liegt die Aufgabe zugrunde, die oben genannten Nachteile zu vermeiden *und ein Verfahren zum Ausbilden von Kühlbohrungen in einer zu beschichtenden* Wand zu schaffen, *welche* Kühlbohrungen eine hohe Kühleffektivität *besitzen.*
Diese Aufgabe wird durch das Verfahren zum Ausbilden einer Filmkühlbohrung des unabhängigen Anspruchs 1 gelöst. Weitere vorteilhafte und zweckmäßige Ausgestaltungen ergeben sich aus den abhängigen Ansprüchen, der Beschreibung und den Zeichnungen.

Das erfindungsgemäße Verfahren zum Ausbilden einer Filmkühlbohrung in einer zu beschichtenden Wand eines Werkstücks, wobei die Filmkühlbohrung in Strömungsreihenfolge einen Zuführabschnitt mit konstanter Querschnittsfläche und einen sich zu einem Auslaß an einer äußeren Oberfläche der Wand hin aufweitenden Diffusorabschnitt aufweist, umfaßt folgende Verfahrensschritte:
A) auswählen von Form und Größe des Zuführabschnitts und des Diffusorabschnitts, um eine gewünschte Ausblaserate von Kühlluft zu erreichen;
B) auswählen der gewünschten Dicke der Beschichtung und der Richtung aus der die Beschichtung erfolgt;
C) erzeugen einer Filmkühlbohrung in der Wand des Werkstücks, dergestalt, daß die Begrenzungsflächen des Diffusorabschnitts zumindest in Teilbereichen entsprechend der gewünschten Dicke der Beschichtung, der Beschichtungsrichtung und des Neigungswinkels der Begrenzungsfläche entlang der Beschichtungsrichtung um eine solche Strecke zurückversetzt wird, daß sich nach einer Beschichtung mit den im Schritt B gewählten Parametern im wesentlichen die in Schritt A gewählte Orginalkontur ergibt.

Die Erfindung beruht demnach auf dem Gedanken, in einer beschichteten, gekühlten Wand Diffusor-Filmkühlbohrungen zu verwenden und die Kühleffektivität der Bohrung dadurch zu steigern, daß die Begrenzungsflächen des Diffusors beim Erzeugen der Bohrungen so zurückgesetzt werden, daß sich nach dem Auffüllen durch den Beschichtungsprozeß im wesentlichen wieder die ursprünglich gewünschte Kühlbohrungskontur ergibt.

Durch die Verwendung von Diffusor-Kühlbohrungen kann die für die konvektive Kühlung verwendete Kühlluft nach der Erfüllung dieser Aufgabe durch die Bildung eines Kühlfilms noch einen wesentlichen Beitrag zur Reduzierung der Materialtemperatur leisten. Durch das Vorsehen von zusätzlichem Platz für die Teilchen des Beschichtungsmaterials erfüllt die Filmkühlbohrung auch nach der Beschichtung noch die Auslegungskriterien. Eine Reduktion des Kühlluftmassenstroms und der Filmkühleffektivität durch ein teilweises Zulegen der Öffnung wird damit verhindert.

Bevorzugt wird bei dem erfindungsgemäßen Verfahren der Zuführabschnitt der Filmkühlbohrung erodiert oder durch Laser-Perkussionsbohren erzeugt, und der Diffusorabschnitt der Filmkühlbohrung erodiert. Die notwendige Zurückversetzung der Begrenzungsflächen wird vorteilhaft aus der Dicke der gewünschten Beschichtung, der Beschichtungsrichtung und dem Neigungswinkels der Begrenzungsfläche anhand der Erstarrungsbedingungen des Beschichtungsmaterials berechnet. Die Beschichtung kann beispielsweise aus einer Richtung senkrecht zur äußeren Oberfläche, oder auch aus einer Richtung senkrecht zu einer Begrenzungsfläche des Diffusorabschnitts erfolgen. Je nach Beschichtungsrichtung kann das Verhältnis von Beschichtungsdicke auf der äußeren Oberfläche zu der Beschichtungsdicke auf der Begrenzungsfläche des Diffusorabschnitts variieren, so daß die Beschichtungsrichtung und der Neigungswinkel der Begrenzungsfläche bei der Bestimmung der erforderlichen Zurücksetzung berücksichtigt werden muß.

Bevorzugt wird die Wand anschließend mit einer schlecht wärmeleitenden, keramischen Schutzschicht, etwa einem sogenannten 'Thermal Barrier Coating' (TBC) beschichtet. Die Beschichtung selbst erfolgt zweckmäßig durch Plasmasprühen.

Mit Vorteil wird bei der oben beschriebenen Filmkühlbohrung die zweite Innenfläche des Diffusorabschnitts um eine Strecke entsprechend der Dicke der Beschichtung, der Beschichtungsrichtung und dem Neigungswinkel der zweiten Innenfläche in dem von der Beschichtung bedeckten Teil zurückversetzt, und die Zurückversetzung der zweiten Innenfläche so gestaltet, daß sie in einem Übergangsbereich zum von der Beschichtung unbedeckten Teil hin kontinuierlich abnimmt. Der Übergang erfolgt bevorzugt kontinuierlich, kann jedoch beispielsweise auch durch eine Stufe realisiert werden.

Vorteilhaft ist es auch, wenn die Seitenflächen des Diffusorabschnitts um eine Strekke entsprechend der Dicke der Beschichtung, der Beschichtungsrichtung und dem Neigungswinkel der Seitenflächen in dem von der Beschichtung bedeckten Teil zurückversetzt sind, und die Zurückversetzung der Seitenflächen in einem Übergangsbereich zum von der Beschichtung unbedeckten Teil hin kontinuierlich abnimmt. Besonders bevorzugt ist es im Rahmen der Erfindung, wenn sowohl die zweite Innenfläche als auch die Seitenflächen des Diffusorabschnitts, wie beschrieben, zurückversetzt sind.

Die Erfindung soll nachfolgend anhand von Ausführungsbeispielen im Zusammenhang mit den Zeichnungen näher erläutert werden. Dabei zeigen
- Fig. 1: einen Querschnitt durch eine gekühlte Wand mit einer Filmkühlbohrung nach dem Stand der Technik;
- Fig. 2: eine Teilansicht der gekühlten Wand in Richtung II-II von Fig. 1;
- Fig. 3: einen Querschnitt durch eine gekühlte Wand mit einer erfindungsgemäßen Filmkühlbohrung vor der Beschichtung;
- Fig. 4: einen Querschnitt durch eine gekühlte Wand mit einer erfindungsgemäßen Filmkühlbohrung nach der Beschichtung;

Dabei sind nur die für das Verständnis der Erfindung wesentlichen Elemente gezeigt. Nicht gezeigt ist beispielsweise der vollständige Hohlprofilkörper und gesamte Anordnung der Kühlbohrungen. Die Strömungsrichtung des Heißgasstroms ist mit Pfeilen bezeichnet.

### Wege zur Ausführung der Erfindung

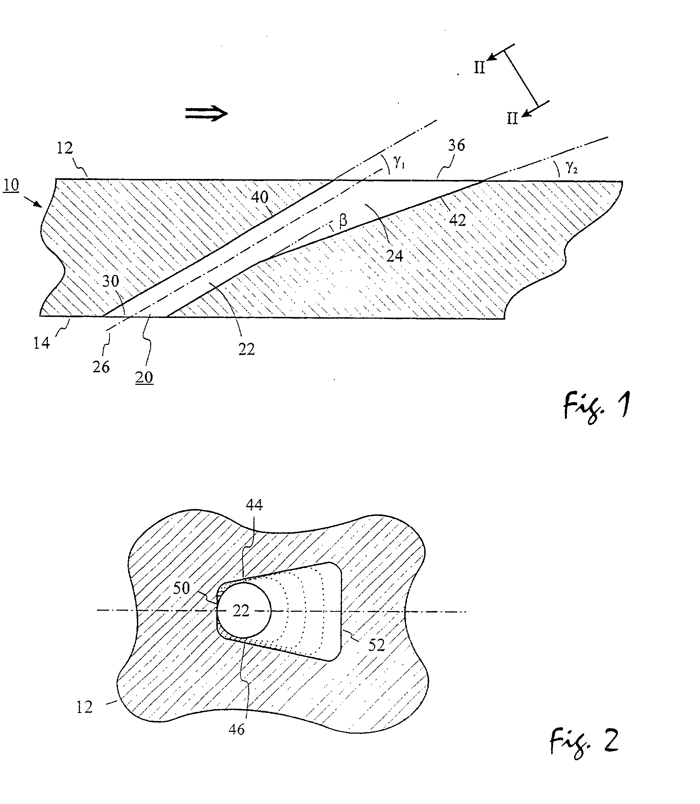

Figuren 1 und 2 zeigen eine bekannte Diffusorgeometrie mit stromabwärtiger Aufweitung der Filmkühlbohrung 20. Dabei zeigt Figur 1 einen Querschnitt durch eine Wand 10 eines Hohlprofilkörpers einer Gasturbinenschaufel mit einer Filmkühlbohrung 20. Das Filmkühlbohrung 20 erstreckt sich von der inneren Oberfläche 14 zur äußeren Oberfläche 12 der Wand 10. An der äußeren Oberfläche 12 strömt in Pfeilrichtung Heißgas entlang. Die innere Oberfläche 14 ist Begrenzungsfläche einer Kühlmittelkammer, die unter Druck stehende Kühlluft enthält. Auf der Kühlkammerseite weist die Filmkühlbohrung einen zylindrischen Zuführabschnitt 22 auf, dessen Querschnitt am Einlaß die durchströmende Kühlluftmenge bestimmt.

Vom Zuführabschnitt 22 strömt die Kühlluft in den Diffusorabschnitt 24. Der Diffusorabschnitt 24 weist zwei voneinander beabstandete Innenflächen 40, 42 auf, die unter einem Winkel β voneinander divergieren. Die Achse 26 tritt unter einem Winkel γ₁ an der äußeren Oberfläche 12 aus. Die Innenflächen 40, 42 bilden mit der äußeren Oberfläche 12 die Winkel γ₁ bzw. γ₂ = γ₁ - β. Typischerweise liegt β dabei unter 30°, etwa zwischen 5° und 10°. Der Winkel γ₁ liegt zwischen 5° und 50°, bevorzugt zwischen 25° und 35°.

Die Schnittkanten der Innenflächen 40, 42 mit der äußeren Oberfläche sind mit den Bezugszeichen 50 und 52 bezeichnet. Wie in Fig. 2 zu sehen, weist der Diffusorabschnitt weiter Seitenflächen 44 und 46 auf, die die Innenflächen 40, 42 schneiden. Beide Seitenflächen 44,46 divergieren zu dem Auslaß 36 des Diffusorabschnitts hin von der Achse 26 der Filmkühlbohrung weg. Dadurch wird eine seitliche Ausbreitung der Kühlluft erreicht, wodurch auf der äußeren Oberfläche 12 auch zwischen den einzelnen Filmkühllbohrungen 20 ein schützender Kühlluftfilm bereitgestellt wird.

Durch den Diffusor wird der Kühlluftstrom schnell in Richtung auf die Strömungsrichtung des Heißgases umgelenkt, so daß sich die ausgeblasene Kühlluft als schützender Film an die Profiloberfläche anlegt. Die Ausblaseraten sind dabei klein, so daß die Gefahr, daß die Kühlluft durch die Strömungsgrenzschicht hindurchtritt, gering ist.

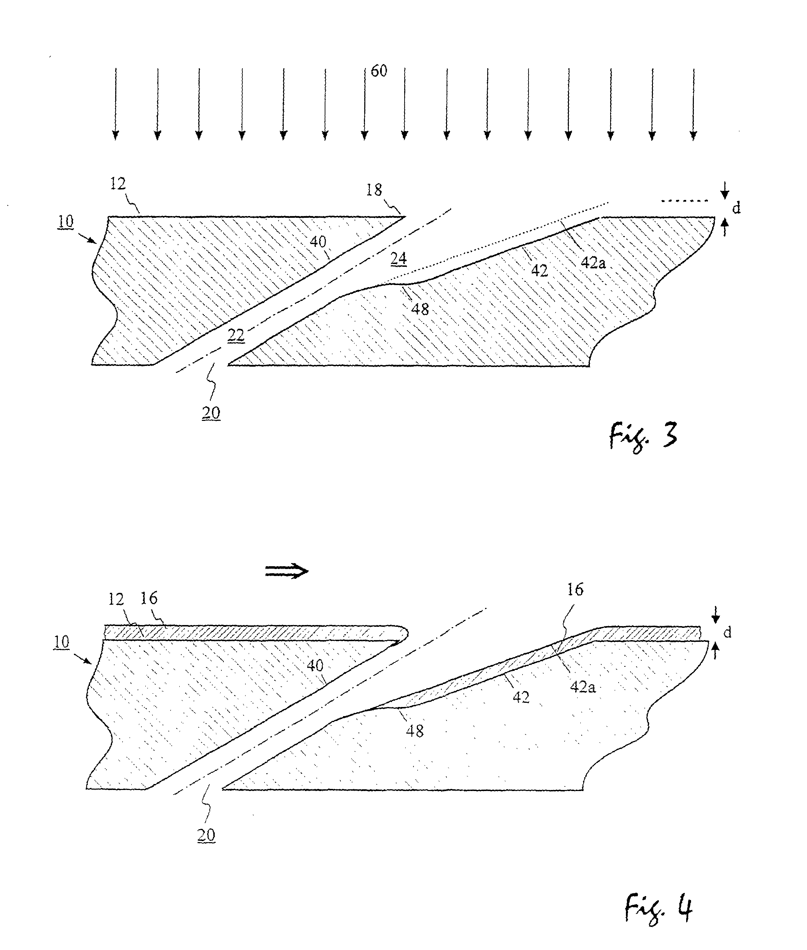

Figur 3 zeigt ein Ausführungsbeispiel einer Filmkühlbohrüng gemäß der Erfindung. Die nachfolgende Beschichtung erfolgt aus Richtung 60 und soll auf der äußeren Oberfläche 12 eine keramische Schutzschicht mit einer Dicke d deponieren. Nach der Beschichtung soll der Diffusorabschnitt 24 eine Kontur aufweisen, die durch die Flächen 40 und 42a begrenzt wird. Gemäß der Dicke d, der Beschichtungsrichtung 60 und dem Neigungswinkel γ₂ der zu erreichenden Innenfläche 42a wird unter Berücksichtigung der bekannten Erstarrungsbedingungen des Beschichtungsmaterials die Größe der erforderlichen Zurücksetzung berechnet. Es ergibt sich damit für die zweite Innenfläche die zurückgesetzte Kontur 42. In einem Übergangsbereich 48 unterhalb der Kante 18 geht die zurückgesetzte Kontur des Diffusorabschnitts kontinuierlich in die unveränderte Kontur 42a über. Die genaue Lage des Übergangsbereichs 48 hängt von der Beschichtungsrichtung 60 ab.

Die Erzeugung der Filmkühlbohrung 20 erfolgte im Ausführungsbeispiel mit Hilfe des Laser-Perkussionsverfahrens für den zylindrischen Zuführabschnitt und mit Hilfe des Erodierverfahrens für den Diffusorabschnitt. Erfindungsgemäß können jedoch auch beide Abschnitte erodiert werden.

Nach erfolgter Beschichtung durch Plasmasprühen ergibt sich die gekühlte, beschichtete Wand von Fig. 4. Die äußere Oberfläche 12 ist mit einer Schutzschicht 16 der Dicke d überzogen. Der zurückgesetzte Teil der Innenfläche 42 ist bis zur gewünschten Orginalkontur 42a mit Beschichtungsmaterial aufgefüllt, wodurch sich praktisch dieselbe Kühleffektivität wie bei einer Filmkühlbohrung in einer unbeschichteten Wand ergibt. Die Beschichtung erlaubt jedoch, Kühlluft einzusparen und im Heißgasstrom zu verwenden, was zu einer Erhöhung der Gasturbinenleistung führt.

Bei dem hier gezeigten Ausführungsbeispiel wurde nur die Zurückversetzung der Innenfläche 42 beschrieben. Die Zurückversetzung der Seitenflächen 44, 46 wird entsprechend den vorstehenden Ausführungen vorgenommen.

### Bezugszeichenliste

- 10: gekühlte Wand
- 12: äußere Oberfläche
- 14: innere Oberfläche
- 16: Beschichtung
- 18: Kante
- 20: Filmkühlbohrung
- 22: Zuführabschnitt
- 24: Diffusorabschnitt
- 26: Achse der Filmkühlbohrung
- 36: Auslaß
- 40: erste Diffusor-Innenfläche
- 42, 42a: zweite Diffusor-Innenfläche
- 44, 46: Diffusor-Seitenflächen
- 48: Übergangsbereich
- 50: stromaufwärtige Kante
- 52: stromabwärtige Kante
- 60: Beschichtungsrichtung

## Patentansprüche

1. Verfahren zum Ausbilden einer Filmkühlbohrung in einer zu beschichtenden Wand eines Werkstücks, wobei die Filmkühlbohrung in Strömungsreihenfolge einen Zuführabschnitt mit konstanter Querschnittsfläche und einen sich zu einem Auslaß an einer äußeren Oberfläche der Wand hin aufweitenden Diffusorabschnitt aufweist, mit folgenden Verfahrensschritten:
A) auswählen von Form und Größe des Zuführabschnitts und des Diffusorabschnitts, um eine gewünschte Ausblaserate von Kühlluft zu erreichen;
B) auswählen der gewünschten Dicke der Beschichtung und der Richtung aus der die Beschichtung erfolgt; und
C) erzeugen einer Filmkühlbohrung in der Wand des Werkstücks, dergestalt, daß die Begrenzungsflächen des Diffusorabschnitt zumindest in Teilbereichen entsprechend der gewünschten Dicke der Beschichtung , der Beschichtungsrichtung und des Neigungswinkels der Begrenzungsfläche entlang der Beschichtungsrichtung um eine solche Strecke zurückversetzt werden, daß sich nach einer Beschichtung mit den im Schritt B gewählten Parametern im wesentlichen die in Schritt A gewählte Orginalkontur ergibt.

2. Verfahren nach Anspruch 1, bei dem in Schritt C der Zuführabschnitt der Filmkühlbohrung erodiert oder durch Laser-Perkussionsbohren erzeugt wird, und der Diffusorabschnitt der Filmkühlbohrung erodiert wird.

3. Verfahren nach einem der vorigen Ansprüche, bei dem die im Schritt C notwendige Zurückversetzung aus der Dicke der gewünschten Beschichtung , der Beschichtungsrichtung und dem Neigungswinkel der Begrenzungsfläche anhand der Erstarrungsbedingungen des Beschichtungsmaterials berechnet wird.

4. Verfahren nach einem der vorigen Ansprüche, bei dem die Wand in einem Schritt D) mit einer schlecht wärmeleitenden keramischen Schutzschicht beschichtet wird.

## Claims

1. Method of forming a film-cooling hole in a workpiece wall to be coated, the film-cooling hole, in the sequence of flow, having a feed section of constant cross-sectional area and a diffuser section widening toward an outlet at an outer surface of the wall, comprising the following steps:
A) selecting the shape and size of the feed section and the diffuser section in order to achieve a desired blow-out rate of cooling air;
B) selecting the desired thickness of the coating and the direction from which the coating is effected; and
C) producing a film-cooling hole in the wall of the workpiece in such a way that at least portions of the boundary surfaces of the diffuser section are set back in accordance with the desired thickness of the coating, the coating direction and the angle of slope of the boundary surface in the coating direction by such a distance that the original contour selected in step A is essentially obtained after coating with the parameters selected in step B.

2. Method according to Claim 1, in which, in step C, the feed section of the film-cooling hole is produced by electrical discharge machining or by laser percussion drilling, and the diffuser section of the film-cooling hole is produced by electrical discharge machining.

3. Method according to either of the preceding claims, in which the set-back necessary in step C is calculated from the thickness of the desired coating, the coating direction and the angle of slope of the boundary surface with reference to the solidification conditions of the coating material.

4. Method as claimed in one of the preceding claims, in which the wall is coated in a step D) with a ceramic protective layer which is a poor conductor of heat.

## Revendications

1. Procédé de formation d'un perçage de refroidissement par film dans une paroi à revêtir d'une pièce usinée, le perçage de refroidissement par film présentant, dans l'ordre de l'écoulement, une section d'acheminement à surface transversale constante et une section de diffuseur s'élargissant vers une sortie sur une surface extérieure de la paroi, présentant les étapes opératoires suivantes :
A) choix de la forme et de la taille de la section d'acheminement et de la section de diffuseur, afin d'obtenir un rythme de soufflage souhaité de l'air de refroidissement ;
B) choix de l'épaisseur souhaitée du revêtement et du sens à partir duquel le revêtement est réalisé ; et
C) réalisation d'un perçage de refroidissement par film dans la paroi de la pièce usinée, de manière à ce que les surfaces dé limitation de la section de diffuseur soient reculées, du moins dans des secteurs partiels, en fonction de l'épaisseur souhaitée du revêtement, du sens de revêtement et de l'angle d'inclinaison de la surface de limitation le long du sens de revêtement, d'une distance telle que l'on obtienne substantiellement, après un revêtement avec les paramètres choisis au cours de l'étape B, le contour original choisi au cours de l'étape A.

2. Procédé selon la revendication 1, dans lequel, au cours de l'étape C, la section d'acheminement du perçage de refroidissement par film est érodée ou réalisée par alésage par percussion au laser et la section de diffuseur du perçage de refroidissement par film est érodée.

3. Procédé selon l'une quelconque des revendications précédentes, dans lequel le recul nécessaire au cours de l'étape C est calculé à partir de l'épaisseur du revêtement souhaité, du sens de revêtement et de l'angle d'inclinaison de la surface de limitation sur la base des conditions de solidification de la matière de revêtement.

4. Procédé selon l'une quelconque des revendications précédentes, dans lequel la paroi est revêtue, au cours d'une étape D), d'une couche protectrice céramique peu conductrice de chaleur.
